# EUROPÄISCHE PATENTSCHRIFT

(11) **EP 1 973 025 B1**
(45) Veröffentlichungstag und Bekanntmachung des Hinweises auf die Patenterteilung: **25.11.2009**
(21) Anmeldenummer: 07104679.1
(22) Anmeldetag: 22.03.2007
(51) Int. Cl.: G05D 23/19

(54) **Temperaturüberwachung bei Leistungsschaltern**
Temperature control around power switches
Supervision de la température à proximité des interrupteurs de courant

(43) Veröffentlichungstag der Anmeldung: 24.09.2008
(73) Patentinhaber: BAUMÜLLER NÜRNBERG GMBH, D-90482 Nürnberg (DE)
(72) Erfinder: Jiang, Jinseng Dr., 90431, Nürnberg (DE)
(74) Vertreter: Götz, Georg Alois

(56) Entgegenhaltungen:
- EP-A- 1 193 756
- US-A- 4 001 649
- US-A1- 2003 001 605

## Beschreibung

Die Erfindung betrifft ein Verfahren zur Bestimmung und/oder Überwachung der Temperaturen von mindestens zwei leistungselektronischen Schaltern, die insbesondere mit Halbleitermaterial hergestellt sind. Ferner sind die beiden Schaltmodule mit oder auf einem gemeinsamen Kühlkörper gekoppelt bzw. angeordnet. Die Temperaturbestimmung und/oder Überwachung erfolgt anhand eines Temperaturmodells, welches je einem der Schalter oder Schaltmodule zugeordnet ist. In dem einem Schalter zugeordneten Temperaturmodell werden Schalter- und Betriebs-Parameter verarbeitet, um die Temperatur und/oder eine Temperaturdifferenz innerhalb des jeweiligen Schalters zu berechnen.

Ferner betrifft die Erfindung eine leistungselektronische, temperaturgebende Schalter-Anordnung, welche insbesondere ein Umrichter für elektrische Antriebe oder ein sonstiger Stromrichter sein kann. Diese Anordnung ist zur Durchführung des genannten Verfahrens geeignet und mit zwei oder mehr Schaltern, insbesondere Leistungshalbleiterschaltern, versehen, die mit oder auf einem gemeinsamen Kühlkörper gekoppelt bzw. angeordnet sind. Eine Recheneinrichtung berechnet für je einen Schalter ein Temperaturmodell und nimmt über Schnittstellen Signale über Schalter- und Betriebsparameter sowie Temperaturmesswerte auf. So lässt sich mittels des in der Recheneinrichtung ablaufenden Temperaturmodells die Temperatur und/oder eine Temperaturdifferenz innerhalb des jeweiligen Schalters berechnen.

Ein Verfahren und eine Anordnung für einen Umrichter mit Leistungshalbleitern etwa der oben genannten Art ist aus EP 1 193 756 A1 bekannt. Es wird ein Temperaturmodell verwendet, das zumindest die Temperatur der Umgebung des Kühlkörpers und/oder der Zuluft für den Kühlkörper, einen Betriebsparameter und einen Geräteparameter berücksichtigt und Temperaturdifferenzen und/oder Temperaturen errechnet. In der Kühlungskette des Umrichters werden zwei Temperaturen verschiedener Positionen gemessen und dabei versucht, über das Temperaturmodell in Verbindung mit der Verlustleistung der Leistungsschalter deren Temperaturen zu berechnen. Dazu wird vorgeschlagen, zwei Temperatursensoren unterschiedlich so zu positionieren, dass die erste Position einen wesentlich geringeren Wärmeleitwiderstand zu den Schaltern besitzt als die zweite Temperatur-Messposition. Konkret misst der Temperatursensor auf der ersten Position die Temperatur der Leistungshalbleiterschalter, und der Temperatursensor auf der zweiten Position die Temperatur der Zuluft, die von einem Lüfter angesaugt und auf den Kühlkörper zur Wärmeabfuhr gerichtet wird. Von Nachteil ist es aber, dass die Temperaturverteilung im Kühlmedium, konkret in der Lüfter-Zuluft, und auch im Kühlkörper als homogen verteilt vorausgesetzt wird, und angenommen wird, dass alle Leistungshalbleiterschalter des Umrichters die gleiche Temperatur und die gleichen Temperaturänderungen aufweisen würden.

Aus der DE 198 60 762 A1 ist ein Verfahren zum Schutz von Endstufen vor Übertemperatur bekannt, wobei die Endstufen Bestandteil eines Steuergerätes für einen Verbrennungsmotor sind. Die Verlustleistung des Leistungsschalters der Endstufe und somit dessen Temperatur wird als der Einschaltzeit proportional angenommen. Die Temperatur wird mittels eines Temperaturmodells ermittelt, das wenigstens die innere Verlustleistung der Steuergeräte-Komponente berücksichtigt. Aus den Ansteuerzeiten wird die aktuelle Verlustleistung der einzelnen Endstufen abgeschätzt.

Aus der DE 35 36 098 A1 ist eine Einrichtung zum Überwachen der Temperatur eines Thyristors bekannt, der über Kühlkörper und Umgebungsluft gekühlt wird. Damit die Maximaltemperatur am Thyristors-Halbleiter nicht überschritten wird, werden die Temperatur der Umgebungsluft und die Verlustleistung des Thyristors ermittelt. Über ein thermisches Modell "Leistungshalbleiter, Kühlkörper, Kühlmedium an bzw. Umgebungsluft" wird die Temperatur am Thyristor bestimmt.

Aus dem Applikationshandbuch 2005/12 der Firma SEMIKRON ist unter Kapitel 3.2 ab Seite 135 das thermische Verhalten von Leistungshalbleiter-Schaltmodulen, insbesondere von IGBT-Modulen beschrieben. Insbesondere sind die Berechnung der Verlustleistungen von Transistor und Freilaufdiode eines IGBT angegeben und die Einhaltung einer maximal erlaubten Sperrschichttemperatur von 150 °C vorgeschrieben. Weiter ist auf Seite 145 zur Berechnung der Sperrschichttemperatur ein detailliertes thermisches Ersatzschaltbild gezeichnet. Allerdings ist in dieser Firmenschrift nicht aufgezeigt, wie für eine Anordnung mit einer Mehrzahl von Leistungshalbleiter-Schaltmodulen, welche vor allem in Umrichtern geläufig ist, eine Temperaturbestimmung und Überwachung effizient durchführbar ist.

Demgegenüber liegt der Erfindung die Aufgabe zugrunde, bei der Temperaturüberwachung einer Anordnung mehrerer leistungselektronischer Schalter die Zuverlässigkeit und Genauigkeit der Temperaturerfassung bei allen Schaltern mit möglichst wenig Zusatzmitteln zu erhöhen.

Zur Lösung werden das im Patentanspruch 1 angegebene Temperatur-Bestimmungs- und/oder Überwachungsverfahren und die im Patentanspruch 10 angegebene leistungselektronische, temperaturgebende Schalteranordnung vorgeschlagen. Optionale, zweckmäßige Ausgestaltungen dieser Erfindungen ergeben sich aus den abhängigen Ansprüchen.

Demnach zeichnet sich die allgemeine erfinderische Idee dadurch aus, dass bei der Leistungsschalter-Überwachung die Temperatursensorik so ausgelegt und eingesetzt wird, dass systematisch mehrere oder vorzugsweise alle Leistungsschalter in die Temperaturerfassung und -auswertung einbezogen sind. Wenn im Rahmen der Erfindung jeder Leistungsschalter mit wenigstens einem Temperatursensor in thermischer Wirkungsverbindung steht, können die Temperaturen grundsätzlich aller Leistungsschalter über die Signalausgänge der Temperatursensoren bei der Temperaturüberwachung berücksichtigt werden.

Mit der allgemeinen erfinderischen Idee lässt sich der Problematik begegnen, dass in der Praxis die Temperaturverteilung des Kühlmediums bzw. der Kühlmittel nicht homogen ist. Vielmehr sind die Temperaturunterschiede zwischen der Eintritts- und Austrittsluft vor allem bei höherer Belastung der Leistungsschalter oder des etwa damit gebildeten Umrichters sehr groß, weil die entsprechend hohe Verlustleistung durch das Kühlmedium abgeführt werden muss. Außerdem weist der Kühlkörper auch größere Temperaturunterschiede an verschiedenen Stellen und in verschiedenen Bereichen auf. Dies ist besonders der Fall, wenn für hohe Leistungen ausgelegte Umrichter große mechanische Dimensionen und Erstreckungen haben oder die Ausgangsfrequenz oder die Motor-Grundschwingungsfrequenz etwa Null ist. Bei Ausgangsfrequenz oder Motor-Grundschwingungsfrequenz Null sind die Verlustleistungen verschiedener Leistungsschalter extrem unterschiedlich.

Mit den Verfahren des eingangs erörterten Standes der Technik ist es nicht möglich, die Temperatur des einzelnen Leistungsschalters mit Hilfe eines Temperaturmodells genau zu berechnen und die Leistungsschalter gegenüber Temperatur zu schützen, weil stets von einer real nicht existierenden Homogenität der Temperaturverteilung ausgegangen wird. Demgegenüber lässt sich mit der Erfindung der Vorteil erzielen, dass die Leistungsschalter aufgrund der präziseren Überwachung thermisch besser ausgenutzt werden können, also mit einer geringeren Stromreserve ausgelegt werden müssen. Mit der Erfindung lassen sich mit einem minimalen Mehraufwand an Temperatursensorik die Temperaturen der mehreren Leistungsschalter etwa eines Umrichters mit großen mechanischen Dimensionen und/oder für Betrieb bei sehr kleiner Ausgangsfrequenz oder Motor-Grundschwingungsfrequenz genau ermitteln und auf der Basis dessen die thermische Leistungsfähigkeit besser ausnutzen.

Gemäß einer optionalen, vorteilhaften Erfindungsausbildung wirken zwei Schalter, die zueinander synchronisiert angesteuert werden und/oder zueinander in Reihe angeordnet sind, derart zusammen, dass an einem zwischen ihnen liegenden Knotenpunkt ein Wechselstrom oder eine Phase eines mehrphasigen Wechselstrom-, insbesondere Drehstromsystems, abgegriffen werden kann. Insbesondere im Falle eines Drehstromsystems, das wie an sich bekannt von einer mit Gleichspannung gespeisten Leistungsschalter-Anordnung, insbesondere einem Umrichter, erzeugt wird, besteht eine optionale Erfindungsausbildung darin, das den Schaltern jeder Wechsel- oder Drehstromphase wenigstens ein gemeinsamer Temperatursensor zugeordnet wird. Dieser kann dann an eine Recheneinrichtung zur Berechnung des Temperaturmodells Temperaturinformationen über die gegenüberliegenden Schalter liefern, zwischen denen der jeweilige Temperatursensor angeordnet ist.

Als Eingangsparameter für das oder die den Schaltern zugeordneten Temperaturmodelle eignen sich Betriebsparameter wie ein durch die Schalter fließender elektrischer Strom, eine an einem oder mehreren Schaltern anliegende elektrische Spannung, insbesondere die Gleichspannung eines Zwischenkreises bei Umrichtern, und/oder die Frequenz oder Häufigkeit der Ansteuerung zum Schalten. Zudem können auch gerätespezifische Parameter wie thermische Widerstände oder Kapazitäten im jeweiligen Schalterinneren oder beim Kühlkörper im jeweiligen Temperaturmodell Verarbeitung finden. Anhand des Temperaturmodells lässt sich dann zum Einen über die thermische Zeitkonstante, die sich bei der Temperaturübertragung zwischen Kühlkörper und Leistungsschalter-Modulboden auswirkt, mittelbar die Temperatur des Modulbodens bzw. des Gehäuses oder Bodens des Leistungsschalters ableiten. Zum anderen können über an sich bekannte Temperaturmodelle (siehe obige SEMIKRON-Firmenschrift, insbesondere dortige Seite 146) ausgehend von der Kühlkörper- und den Gehäusetemperaturen die zeitlichen Verläufe der Sperrschichttemperatur von beispielsweise Transistor und Diode eines gängigen Leistungsschaltmoduls berechnet werden, um die Einhaltung der maximal zulässigen Sperrschichttemperatur zu kontrollieren. Ferner sind in der oben genannten SEMIKRON-Firmenschrift aaO Methoden zur Bestimmung der Verlustleistungen für beispielsweise Transistor und Diode eines Leistungsschaltermoduls angegeben.

Bei Einsatz der Leistungsschalter-Temperaturüberwachung zum Betrieb von elektrischen Drehstrommotoren kann man auf das Problem stoßen, dass der Motor sich nicht nur bewegt, also von einem elektrischen Drehfeld durchsetzt wird, sondern auch sich im Stillstand befinden kann. Im ersten Fall, also bei Ausgangs- oder Motor-Grundschwingungsfrequenzen von etwa mehr als fünf Hertz, reicht es aus, von einem Strommittelwert auf einen Mittelwert für die Verlustleistung des jeweiligen Leistungsschalters zu schließen, und diesen Mittelwert für das Temperaturmodell zu verwenden. Im zweiten Fall, also bei Ausgangs- oder Motor-Grundschwingungsfrequenzen etwa unter fünf Hertz, ist es vorzuziehen, Formeln und Methoden (siehe oben genannte SEMIKRON-Firmenschrift) zur Berechnung des Augenblickswertes der jeweiligen Schalter- Verlustleistung zu verwenden.

Die erfindungsgemäße leistungselektronische und temperaturgebende Schalter-Anordnung zeichnet sich durch die Zuordnung eines Temperatursensors zu je wenigstens zwei Leistungsschaltern aus, wobei aufgrund der mittigen Temperatursensor-Anordnung zwischen diesen für die Erfassung und Überwachung der Leistungsschaltertemperaturen nur etwa die halbe Anzahl an Temperatursensoren im Vergleich zur Anzahl der Leistungsschalter notwendig ist. So reichen bei üblichen Umrichtern für Drehstrommotoren mit sechs Leistungschaltern drei Temperatursensoren aus, die vorzugsweise mittig zwischen zwei Schaltern einer Wechselstromphase angeordnet sind.

Darüber hinaus können, gemäß einer optionalen, vorteilhaften Ausgestaltung der Erfindung, im Falle von mehr als zwei Leistungsschaltern die entsprechend mehreren Temperatursensoren über die Oberfläche des Kühlkörpers vorzugsweise gleichmäßig verteilt angeordnet sein. Alternativ oder zusätzlich ist es zweckmäßig, die mehreren Temperatursensoren längs einer vorzugsweise mittleren Symmetrielinie des Kühlkörpers zu positionieren. Im Falle von beispielsweise sechs Leistungsschaltern zur Erzeugung eines Drehstromnetzes können die entsprechend drei Temperatursensoren jeweils zwischen zwei Leistungsschaltern in der Mitte liegen, wobei die Symmetrielinie dann beispielsweise eine mittlere Längsachse des Kühlkörpers darstellt.

Weitere Einzelheiten, Merkmale, Merkmalskombinationen, Wirkungen und Vorteile auf der Basis der Erfindung ergeben sich aus der nachfolgenden Beschreibung eines bevorzugten Ausführungsbeispiels der Erfindung sowie aus den Zeichnungen. Diese zeigen in:
- Fig 1:: eine gerätetechnische Blockdarstellung eines Leistungsteiles mit Umrichter und Luftkühlung und sowie einer digitalen Signalverarbeitung zur Temperaturüberwachung
- Fig 2:: einen Prinzipschaltplan der Umrichter-Schalterkonfiguration zur Erzeugung ein dreiphasiges Drehstromsystems für einen elektrischen Antrieb, und,
- Fig 3:: ein vereinfachtes, thermisches Ersatzschaltbild eines mit Leistungshalbleitern realisierten Schaltermodules.

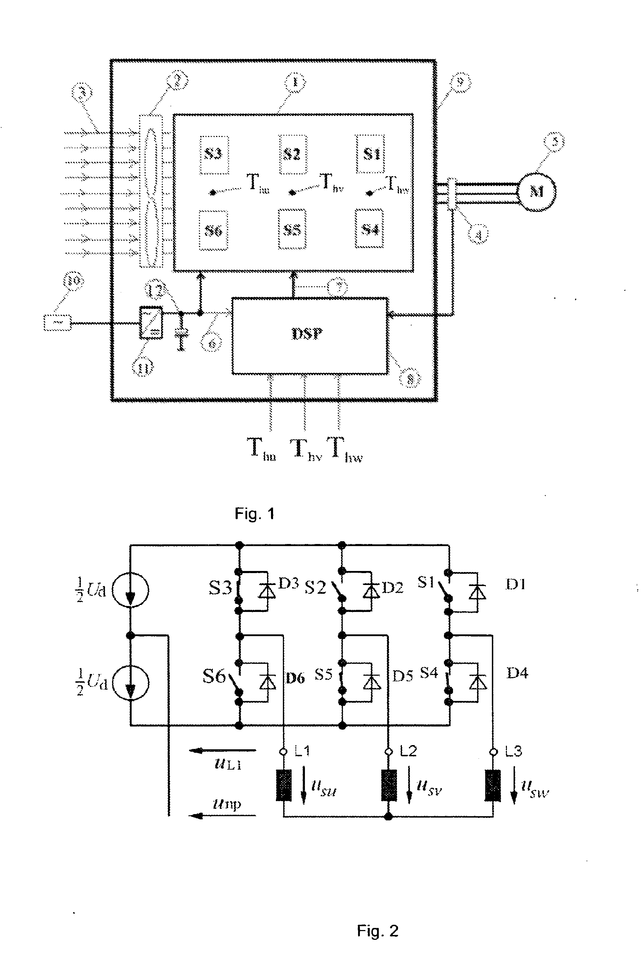

Gemäß Figur 1 sind auf einem etwa länglich - rechteckigen Kühlkörper sechs Leistungshalbleiterschalter S1 - S6 direkt montiert. Sie sind in zwei parallele bzw. nebeneinander verlaufende Reihen S1 - S3 bzw. S4 - S6 angeordnet, die jeweils in einer Hälfte des Kühlkörpers und in dessen Längsrichtung verlaufen. In Figur 2 ist die detaillierte Verschaltung der Schalter S1 - S6, wie sie in der Fachwelt weithin geläufig ist (vgl. z.B. eingangs genannte SEMIKRON-Firmenschrift Seiten 68,69 und 139), gezeichnet. Insbesondere ist ersichtlich, dass jedem Leistungsschalter S1, ...S6 eine Freilauf- bzw. Rückarbeitdiode D1, ...D6 zugeordnet ist. Zwischen je zwei in Serie geschalteten Leistungsschaltern S1, S4; S2, S5; S3, S6, die je eine Phase U, V, W des dreiphasigen Drehstromsystems generieren, wird eine sinusförmige Wechselspannung abgegriffen und beispielsweise den Spulen L1, L2, L3 des Ständers eines Drehstrommotors zugeführt.

Gemäß Figur 1 wird an den drei Phasensträngen des Drehstrommotors 5 eine Strommessung 4 durchgeführt. Der Kühlkörper 1 wird über einen Lüfter 2 mit Zuluft zur Wärmeabfuhr beaufschlagt. Die Signalausgänge der Strommessung 4 sind einer Recheneinrichtung 8, beispielsweise einem digitalen Signalprozessor (DSP) zugeführt, der unter anderem zur Verarbeitung und Auswertung von Sensor-Eingangssignalen und zur Temperaturüberwachung anhand eines darauf implementierten Temperaturmodells programmierbar ist. Ferner ist die Recheneinheit 7 beispielsweise über einen Analog-/Digitalwandler mit Mitteln zur Messung einer Zwischenkreisspannung 12 zur weiteren Auswertung verbunden. Der Erzeugung der Zwischenkreisspannung dient ein Gleichrichter 11, der von der Netzspannung 10 gespeist wird. Die aus der Netzspannung 10 mittels des Gleichrichters 11 gewonnene Gleichspannung 12 wird, wie an sich bekannt, über den Umrichter 9 in ein Drehstromsystem zur Speisung des Drehstrommotors 5 umgewandelt. Die Leistungsschalter S1 - S6 werden durch die Recheneinheit 8 über Ansteuerungssignale 7 nach Verfahren der Pulsweitenmodulation (PWM) angesteuert bzw. betätigt, um an den Ständerspulen L1, L2, L3 geeignete Spannungen Uu, Uv, Uw entsprechend den drei Phasen des Drehstromsystems und zur Erzeugung sinusförmiger Wechselströme zu generieren. Bei Umrichtern höherer Leistung müssen diskrete Leistungsschalter eingesetzt werden, deren mechanische Dimensionen naturgemäß recht groß sind.

In diesen Leistungsschaltern S1 - S6 entstehen beim Betrieb Verlustleistungen, die von unterschiedlichen Betriebsparametern und den gerätetechnischen Parametern der Leistungsschalter abhängen. Die Betriebsparameter können beispielsweise der elektrische Strom, der durch den Leistungsschalter fließt und mittels der Strommessung 4 erfasst werden kann, die Zwischenkreisspannung 12, die mittels der Spannungsmessung 6 erfasst werden kann, die Schaltfrequenz der Leistungsschalter und die Betriebsart oder Grundschwingungsfrequenz des Drehstrommotors 5 sein. Die Parameter der Leistungsschalter sind in der Regel von den Herstellern der Leistungsschalter bekannt. Die Leistungsschalter-Verlustleistung überträgt sich auf den Kühlkörper 1, und die ihn umgebende Zuluft 3 führt als Kühlmedium die Verlustleistung in die Außenumgebung ab. In der Recheneinheit lassen sich Verfahren einschließlich thermische Ersatzschaltbilder für die Leistungsschalter implementieren, um die Verlustleistung und/oder die Sperrschichttemperaturen der Schalter zu berechnen, wobei im letzteren Fall die Realisierung mit Leistungshalbleitern vorausgesetzt ist.

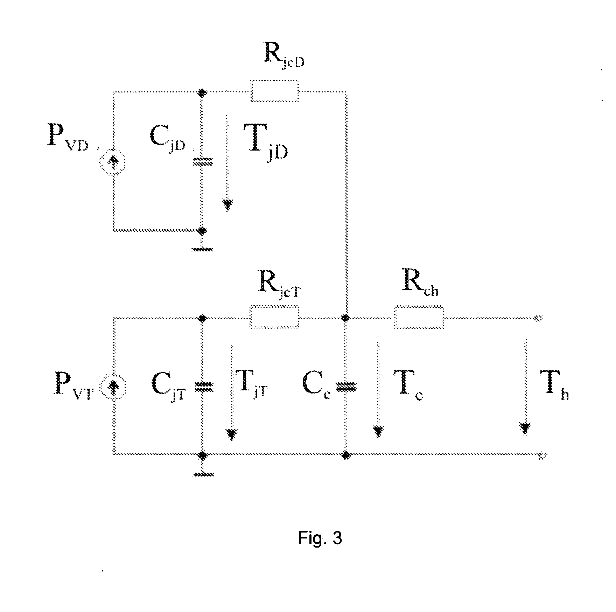

Die Temperaturen der Leistungsschalter S1 - S6 sind wiederum von der Verlustleistung und den verschiedenen thermischen Parametern des gesamten Leistungsteils abhängig, die vom mechanischen Aufbau bedingt werden. Diese Geräteparameter sind die thermischen Widerstände und die thermischen Kapazitäten der Leistungsschalter S1 - S6 und des Kühlkörpers 1. Die thermischen Widerstände und die thermischen Kapazitäten der Leistungsschalter werden von den Halbleiterherstellern bekannt gegeben (vgl. eingangs genannte SEMIKRON-Firmenschrift), und die des Kühlkörpers (1) können durch Messen der verschiedenen Leistungsteile ermittelt werden. Um das zulässige Maximum der Sperrschichttemperatur der Leistungsschalter zu überwachen, wird ein diesen jeweils zugeordnetes Temperaturmodell verwendet, das der Berechnung der Sperrschichttemperatur dient (vgl. SEMIKRON-Firmenschrift aaO). Bei dem in Figur 3 dargestellten thermischen Ersatzschaltbild bedeuten:
PVD: die Verlustleistung der Rückarbeitdiode
RjcD: Thermischer Übergangswiderstand der Diode zwischen Chip und Modulboden
CjD: Thermische Kapazität des Diode-Chips
PVT: die Verlustleistung des Transistors
RjcT: Thermischer Übergangswiderstand des Transistors zwischen Chip und Modulboden
CjT: Thermische Kapazität des Transistors
Rch: Thermischer Übergangswiderstand zwischen Modulboden und Kühlkörper Cc: Thermische Kapazität des Modulbodens
TjD: Temperatur der Diode- Sperrschicht
TjT: Temperatur der Transistor- Sperrschicht
Tc: Temperatur des Modulbodens
Th: Temperatur des Kühlkörpers , Thu beispielsweise für Phase U

Beim Betrieb mit einer Drehspannung ist der durch den jeweiligen Leistungsschalter S1 - S6 fließende Strom sinusförmig und dessen Amplitude ändert sich zwischen Null und dem Maximalwert periodisch. Somit ändert sich auch die Verlustleistung periodisch im Leistungsschalter. Bei einer Ausgangsfrequenz des Umrichters 9 von mehr als fünf Hertz kann näherungsweise der Mittelwert der Verlustleistung wegen der Auswirkungen der thermischen Zeitkonstanten zur Berechnung der Temperatur der Leistungshalbleiter-Sperrschicht verwendet werden. Bei kleiner Ausgangsfrequenz beispielsweise etwa bis zu fünf Hertz ist der Momentan- bzw. Augenblickswert der Verlustleistung zu verwenden. Wegen der Berechnung der Verlustleistungen wird auf die SEMIKRON-Firmenschrift aaO verwiesen.

Gemäß Figur 1 wird für jede Drehstromphase U, V, W mittels Temperatursensoren Thu, Thv, Thw gemessen. Die Messpositionen sind derart gewählt, dass die Temperatur der Sperrschicht eines Leistungsschalters, beispielsweise S1 (oder S4) für Phase W, nahezu unabhängig von der Verlustleistung der anderen Phasen U, V zugeordneten Leistungsschalter, beispielsweise S2 oder S5 der Phase V, in der Recheneinheit 8 berechnet werden kann. Analog lässt sich die Verlustleistung eines Leistungsschalters bestimmter Wechselstromphasen, beispielsweise S1 der Phase W, nahezu unabhängig von der Verlustleistung des dieser Phase W ebenfalls zugeordneten zweiten Schalters S4 berechnen. Für alle Schalter S1 - S6 lassen sich die jeweiligen Sperrschichttemperaturen anhand der Ausgangssignale der Temperatursensoren Thu, Thv, Thw berechnen.

Gemäß Figur 1 sind die Messpositionen der genannten Temperatursensoren so gewählt, dass auch eine inhomogene Temperaturverteilung auf dem Kühlkörper und/oder zwischen den einzelnen Leistungsschaltern S1 - S6 die Temperaturüberwachung der einzelnen Leistungsschalter nicht nachteilig beeinträchtigt. Dazu sind die Temperatursensoren Thu, Thv, Thw jeweils genau in die Mitte zwischen zwei einer einzelnen Drehstromphase U, V, W zugeordneten Schaltern S1, S4; S2, S5; S3, S6 gelegt. Daraus resultiert die Anordnung der Temperatursensoren in einer gemeinsamen Reihe zwischen den beiden Reihen mit Leistungsschaltern S1 - S3 bzw. S4 - S6, entsprechend der Längsrichtung des Kühlkörpers 1. Gemäß Figur 1 ist eine Anordnung der drei Temperatursensoren Thu, Thv, Thw jeweils zwischen den beiden Schaltern eines einer Drehstromphase zugeordneten Leistungsschalterpaares entlang einer Symmetrielinie, insbesondere der mittleren Längsachse des Kühlkörpers 1, zweckmäßig.

Die thermische Zeitkonstante Tch = Rch * Cc, die den thermischen Übergang zwischen dem Modulboden des Leistungsschalters und dem Kühlboden 1 darstellt und im Temperaturmodell zur Bildung der Eingangsseite gegenüber dem Temperatursensor-Meßwert verwendet wird, wird in der Praxis für jeden Typ Leistungsteil durch Test ermittelt.

Wenn die berechnete Sperrschicht-Temperatur oder die Temperaturdifferenz zwischen der Sperrschicht und dem Modulboden eines Leistungsschalters eine bestimmte Grenze überschreiten, wird mindestens eine Sicherheitsaktion eingeleitet. Beispiele für solche Sicherheitsaktionen sind:
Akustische und/oder optische Signale
Reduktion des Stromes
Reduktion der Schaltfrequenz oder Motor-Grundschwingungsfrequenz
Sperren des Umrichters

Es können auch mehrere Grenzen bzw. Schwellwerte eingerichtet werden, um dementsprechend unterschiedliche Aktionen einzuleiten.

### Bezugszeichenliste:

1 Kühlkörper
2 Lüfter
3 Zuluft
4 Strommessung
5 Motor
6 Messung der Zwischenkreisspannung (ZKS)
7 Ansteuerungssignale
8 DSP zur Überwachung und Auswertung
9 Umrichter
10 Netzspannung
11 Gleichrichter
12 Zwischenkreisspannung (ZKS)
S1, S4 Leistungshalbleiterschalter der Phase W
S2, S5 Leistungshalbleiterschalter der Phase V
S3, S6 Leistungshalbleiterschalter der Phase U
D1, D4 Rückarbeit- bzw. Freilaufdiode der Phase W
D2, D5 Rückarbeit- bzw. Freilaufdiode der Phase V
D3, D6 Rückarbeit- bzw. Freilaufdiode der Phase U
Thu Temperatursensor der Phase U
Thv Temperatursensor der Phase V
T_{hw} Temperatursensor der Phase W

## Patentansprüche

1. Verfahren zur Bestimmung und/oder Überwachung der Temperaturen mindestens zweier leistungselektronischer Schalter (S1-S6), insbesondere Halbleiter-Leistungsschalter, die mit oder auf einem gemeinsamen Kühlkörper (1) gekoppelt beziehungsweise angeordnet werden, welche Temperatur-Bestimmung und/oder -Überwachung anhand eines je einem Schalter (S1-S6) zugeordneten Temperaturmodells erfolgt, in welchem Schalter- und Betriebsparameter sowie Temperaturmesswerte zur Errechnung der Temperatur und/oder einer Temperaturdifferenz innerhalb des jeweiligen Schalters (S1-S6) verarbeitet werden, **dadurch gekennzeichnet, dass** als Eingangsparameter für das Temperaturmodell ein Temperatur-Messwert aus einem Temperatursensor (Thu,Thv,Thw) verwendet wird, der räumlich mittig zwischen den mindestens zwei Schaltern (S1-S6) angeordnet ist und in Wärme übertragender Verbindung mit dem Kühlkörper (1) steht.

2. Verfahren nach Anspruch 1, **dadurch gekennzeichnet, dass** die mindestens zwei Schalter (S1-S6) paarweise koordiniert und/oder aufeinander gegebenenfalls zeitlich abgestimmt zur Erzeugung eines Wechselstromes oder einer Phase (U,V,W) eines zwei-, drei- oder mehrphasigen Wechselstromsystems, insbesondere Drehstromsystems (Usu,Usv,Usw), aus einer Gleichspannung betätigt werden.

3. Verfahren nach Anspruch 1 oder 2, wobei zur Erzeugung eines zwei-, drei- oder mehrphasigen Wechsel- oder Drehstromssystems (Usu,Usv,Usw) mehr als zwei Schalter (S1-S6) verwendet werden, die jeweils mit dem gemeinsamen Kühlkörper (1) gekoppelt sind, **dadurch gekennzeichnet, dass** als Eingangsparameter für das Temperaturmodell pro Schalter (S1-S6) ein Temperatur-Messwert aus einem Temperatursensor (Thu,Thv,Thw) verwendet wird, der auf dem Kühlkörper (1) räumlich mittig zwischen zwei nebeneinander und/oder nächstliegend angeordneten Schaltern (S1-S6) angeordnet ist.

4. Verfahren nach Anspruch 3, **dadurch gekennzeichnet, dass** den Schaltern (S1,S4;S2,S5;S3,S6) jeder Wechsel- oder Drehstromphase (U,V,W) jeweils wenigstens ein gemeinsamer Temperatursensor (Thu,Thv,Thw) zugeordnet wird.

5. Verfahren nach einem der vorangehenden Ansprüche, **dadurch gekennzeichnet, dass** als Eingangsparameter für das oder die Temperaturmodelle ein durch die Schalter (S1-S6) fließender elektrischer Strom, eine an einem oder mehreren Schaltern (S1-S6) anliegende elektrische Spannung, eine Schaltfreqenz oder -häufigkeit der Schalter und/oder thermische Widerstände und/oder Kapazitäten der Schalter (S1-S6) und/oder des Kühlkörpers (1) verwendet werden.

6. Verfahren nach einem der vorangehenden Ansprüche, unter Verwendung von Leistungshalbleiterschaltern, **dadurch gekennzeichnet, dass** für jeden Leistungshalbleiterschalter mittels des Temperaturmodells eine oder mehrere Sperrschicht-Temperaturen und/oder wenigstens eine Temperaturdifferenz zwischen einer Sperrschicht-Temperatur und einer Gehäuse- oder Bodentemperatur des Leistungshalbleiterschalter berechnet werden, und bei Überschreiten einer bestimmten Temperatur-Schwelle durch die berechneten Temperaturen oder Temperaturdifferenzen Sicherheitsmassnahmen ausgelöst werden.

7. Verfahren nach einem der vorangehenden Ansprüche, unter Verwendung von Leistungshalbleiterschaltern, **dadurch gekennzeichnet, dass** im Temperaturmodell Werte für die Verlustleistung eines oder mehrerer, aktiv schaltbarer Elemente, beispielsweise Transistor und/oder Diode des Leistungshalbleiterschalters verarbeitet werden.

8. Verfahren nach Ansprüche 6 und 7, **dadurch gekennzeichnet, dass** bei einer Ausgangs- oder Grundschwingungsfrequenz von mehr als 5 Hz zur Berechnung der einen oder mehreren Sperrschichttemperaturen ein Mittelwert für die jeweilige Verlustleistung verwendet wird.

9. Verfahren nach Ansprüche 6 und 7, **dadurch gekennzeichnet, dass** bei einer Ausgangs- oder Grundschwingungsfrequenz von bis zu 5 Hz zur Berechnung der einen oder mehreren Sperrschichttemperaturen ein Augenblicks- beziehungsweise Momentanwert für die jeweilige Verlustleistung verwendet wird.

10. Leistungselektronische, temperaturgebende Schalter-Anordnung, insbesondere Umrichter (9) für elektrische Antriebe oder sonstiger Stromrichter, zur Durchführung des Verfahrens nach einem der vorangehenden Ansprüche, mit zwei oder mehr Schaltern (S1,S2,S3), insbesondere Leistungshalbleiterschaltern, die mit oder auf einem gemeinsamen Kühlkörper (1) gekoppelt beziehungsweise angeordnet sind, und mit einer Recheneinrichtung (8), die zur Implementierung und Ausführung eines Temperaturmodells über je einen Schalter (S1-S6) geeignet ist und Schnittstellen zur Aufnahme von Signalen über Schalter- und Betriebsparameter sowie Temperaturmesswerte aufweist, um mittels des Temperaturmodells die Temperatur und/oder eine Temperaturdifferenz innerhalb des jeweiligen Schalters (S1-S6) zu berechnen, **dadurch gekennzeichnet, dass** mittig zwischen den zwei oder jeweils zwei Schaltern (S1,S4;S2,S5;S3,S6) ein Temperatursensor (Thu,Thv,Thw) angeordnet ist, der oder die Wärme übertragend mit dem Kühlkörper (1) und ausgangseitig mit der Recheneinrichtung (8) gekoppelt sind.

11. Anordnung nach Anspruch 10, **dadurch gekennzeichnet, dass** der oder die Temperatursensoren (Thu,Thv,Thw) direkt auf dem Kühlkörper (1) montiert sind.

12. Anordnung nach Anspruch 10 oder 11, **dadurch gekennzeichnet, dass** die mehreren Temperatursensoren (Thu,Thv,Thw) längs einer mittleren Symmetrielinie des Kühlkörpers (1) angeordnet sind.

13. Anordnung nach einem der Ansprüche 10 bis 12, **dadurch gekennzeichnet, dass** die mehreren Temperatursensoren (Thu,Thv,Thw) über die Oberfläche des Kühlkörpers (1) gleichmäßig verteilt angeordnet sind.

14. Anordnung nach einem der Ansprüche 10 - 13, wobei mehr als zwei Schalter (S1-S6) zur Erzeugung eines zwei-, drei- oder mehrphasigen Wechselstromsystems (U,V,W) auf dem Kühlkörper (1) verschaltet und ansteuerbar sind, **dadurch gekennzeichnet, dass** pro Wechselstromphase (U,V,W) ein Temperatursensor (Thu,Thv,Thw) mittig zwischen zwei Schaltern (S1-S6) angeordnet ist.

15. Anordnung nach Anspruch 14, **dadurch gekennzeichnet, dass** zur Erzeugung eines dreiphasigen Drehstromsystems (U,V,W) auf dem Kühlkörper (1) wenigstens sechs Schalter (S1-S6) verschaltet und ansteuerbar sind, von denen je zwei (S1,S4;S2,S5;S3,S6) der Erzeugung einer Drehstromphase (U,V,W) dienen und einander gegenüber liegend angeordnet sind, **dadurch gekennzeichnet, dass** pro Drehstromphase (U,V,W) zwischen den zwei gegenüber liegenden Schaltern (S1,S4;S2,S5;S3,S6) je ein Temperatursensor (Thu,Thv,Thw) mittig angeordnet ist.

## Claims

1. Method for detecting and/or monitoring the temperatures of at least two electronic power switches (S1 - S6), in particular semi-conductor power switches that are coupled with, e.g. arranged on a common cooling body (1), whereby a temperature detection and/or monitoring is carried out by means of a temperature model each allocated to a switch (S1 - S6), in which switch and operating parameters as well as temperature measurement values are processed for calculating the temperature and/or a temperature difference in the relevant switch (S1 - S6), **characterised in that** a temperature measurement value from a temperature sensor (Thu, Thv, Thw) is used as an input parameter for the temperature model, which is positioned centrally between at least two switches (S1 - S6) and stands in a heat transmitting connection with the cooling body (1).

2. Method according to Claim 1, **characterised in that** the at least two switches (S1 - S6) are co-ordinated in parallel and/or timed in relation to each other for generating an alternating current or a phase (U, V, W) of a two-, three- or multi-phase alternating current system, in particular a three-phase system (Usu, Usv, Usw) from a direct current.

3. Method according to Claim 1 or 2, whereby more than two switches (S1 - S6) are used for generating a two-, three- or multi-phase alternating or three-phase system (Usu, Usv, Usw), which are each coupled with the common cooling body (1), **characterised in that** one temperature measurement value from the temperature sensor (Thu, Thv, Thw) is used per switch (S1 - S6) as an input parameter for the temperature model, which is positioned centrally on the cooling body (1) between two adjacently located and/or adjacently arranged switches (S1 - S6).

4. Method according to Claim 3, **characterised in that** the switches (S1, S4; S2, S5; S3, S6) of each alternating or three-phase current phase (U, V, W) are allocated at least one common temperature sensor (Thu, Thv, Thw).

5. Method according to one of the preceding Claims, **characterised in that** an electric current flowing through the switches (S1 - S6), an electric voltage applied to one or more switches (S1 - S6), a switching frequency or interval of the switches and/or thermic resistances and/or capacities of the switches (S1 - S6) and/or the cooling body (1) are used as an input parameter for the temperature model(s).

6. Method according to one of the preceding Claims using semi-conductor power switches, **characterised in that** one or more barrier layer temperatures and/or at least one temperature difference between a barrier layer temperature and a housing or floor temperature of the semi-conductor power switch is calculated by means of the temperature model for each semi-conductor power switch, and safety measures are triggered by the calculated temperatures or temperatures differences when a certain temperature threshold is exceeded.

7. Method according to one of the preceding Claims using semi-conductor power switches, **characterised in that** values for losses of one or more actively switchable elements, for example the transistor and/or the diode of the semi-conductor power switch, are processed by means of the temperature model.

8. Method according to Claims 6 and 7, **characterised in that** a median value for the relevant losses is used for calculating one or more barrier layer temperatures for an output or basic vibration frequency of more than 5 Hz.

9. Method according to Claims 6 and 7, **characterised in that** a current or momentary value is used for the relevant losses for calculating one or more barrier layer temperatures for an output or basic vibration frequency of up to 5 Hz.

10. Electronic temperature emitting power switch arrangement, in particular a transformer (9) for electric drives or other power rectifiers for carrying out the method according to one of the preceding Claims, with two or more switches (S1, S2, S3), in particular semi-conductor power switches coupled with or arranged on a common cooling body (1), and with a calculator (8) suitable for implementing and executing a temperature model by means of one switch (S1 - S6) each, and interfaces for receiving signals representing switch and operating parameters as well as temperature measurement values in order to calculate the temperature and/or a temperature difference within the relevant switch (S1 - S6) by means of the temperature model, **characterised in that** a temperature sensor (Thu, Thv, Thw) is located centrally between the two or between two switches (S1, S4; S2, S5; S3, S6) each, which is/are connected in a heat transmitting way with the cooling body (1) and coupled with the output side of the calculator (8).

11. Arrangement according to Claim 10, **characterised in that** the temperature sensor(s) (Thu, Thv, Thw) is fitted directly to the cooling body (1).

12. Arrangement according to Claim 10 or 11, **characterised in that** the number of temperature sensors (Thu, Thv, Thw) is arranged along a central symmetrical line of the cooling body (1).

13. Arrangement according to one of the Claims 10 to 12, **characterised in that** the number of temperature sensors (Thu, Thv, Thw) is evenly distributed across the surface of the cooling body (1).

14. Arrangement according to one of the Claims 10 to 13, whereby more than two switches (S1 - S6) are positioned on the cooling body (1) for generating a two-, three- or multi-phase alternating current system (U, V, W) and can be controlled there, **characterised in that** one temperature sensor (Thu, Thv, Thw) is positioned centrally between two switches (S1- S6) per alternating current phase (U, V, W).

15. Arrangement according to Claim 14, **characterised in that** at least six switches (S1 - S6) are positioned and can be controlled on the cooling body (1) for generating a three-phase current system (U, V, W), of which two (S1, S4; S2, S5; S3, S6) serve for generating a three-phase current (U, V, W), **characterised in that** for every three-phase current (U. V, W) one temperature sensor (Thu, Thv, Thw) each is positioned centrally between two opposing switches (S1, S4; S2, S5; S3, S6) opposite each other.

## Revendications

1. Procédé de détermination et/ou de surveillance des températures d'au moins deux interrupteurs électroniques de puissance (S1-S6), en particulier des interrupteurs de puissance à semi-conducteurs, qui sont couplés avec ou disposés sur un dissipateur de chaleur (1) commun, laquelle détermination et/ou surveillance de la température s'effectue à l'aide d'un modèle de température associé respectivement à un interrupteur (S1-S6), dans lequel sont traités des paramètres des interrupteurs et des paramètres de fonctionnement, ainsi que des valeurs mesurées de température, permettant de calculer la température et/ou une différence de température à l'intérieur de l'interrupteur (S1-S6) respectif, **caractérisé en ce que** l'on utilise comme paramètre d'entrée pour le modèle de température une valeur mesurée de température émise par un capteur de température (Thu, Thv, Thw) qui est disposé spatialement au centre entre les interrupteurs (S1-S6), au moins au nombre de deux, et en liaison de transfert thermique avec le dissipateur de chaleur (1).

2. Procédé selon la revendication 1, **caractérisé en ce que** les interrupteurs (S1-S6), au moins au nombre de deux, sont activés de manière coordonnée par paires et/ou synchronisée le cas échéant dans le temps, pour générer un courant alternatif ou une phase (U, V, W) d'un système à courant alternatif à une, deux ou plusieurs phases, en particulier d'un système à courant triphasé (Usu, Usv, Usw), à partir d'une tension continue.

3. Procédé selon la revendication 1 ou 2, dans lequel, pour générer un système à courant alternatif à deux, trois ou plusieurs phases ou un système triphasé (Usu, Usv, Usw), on utilise plus de deux interrupteurs (S1-S6) qui sont respectivement couplés avec le dissipateur de chaleur (1) commun, **caractérisé en ce que** l'on utilise comme paramètre d'entrée pour le modèle de température, pour chaque interrupteur (S1-S6), une valeur mesurée de la température émise par un capteur de température (Thu, Thv, Thw) qui est disposé sur le dissipateur de chaleur (1), spatialement au centre entre deux interrupteurs (S1-S6) disposés côte à côte et/ou au plus près l'un de l'autre.

4. Procédé selon la revendication 3, **caractérisé en ce qu'**est associé aux interrupteurs (SI, S4 ; S2, S5 ; S3, S6) de chaque phase alternative ou triphasée (U, V, W), respectivement au moins un capteur de température (Thu, Thv, Thw) commun.

5. Procédé selon l'une des revendications précédentes, **caractérisé en ce que** l'on utilise comme paramètre d'entrée pour le ou les modèle(s) de température un courant électrique traversant les interrupteurs (S1-S6), une tension électrique appliquée à un ou plusieurs interrupteurs (S1-S6), une fréquence de commutation des interrupteurs et/ou des résistances et/ou capacités thermiques des interrupteurs (S-S6) et/ou du dissipateur de chaleur (1).

6. Procédé selon l'une des revendications précédentes, utilisant des interrupteurs de puissance à semi-conducteurs, **caractérisé en ce que** sont calculées, pour chaque interrupteur de puissance à semi-conducteurs, au moyen du modèle de température, une ou plusieurs température(s) de couche de jonction et/ou au moins une différence de température entre une température de couche de jonction et une température du boîtier ou de la base de l'interrupteur de puissance à semi-conducteurs, et **en ce que** des mesures de sécurité sont déclenchées en cas de dépassement par les températures ou les différences de température calculées d'un seuil de température déterminé.

7. Procédé selon l'une des revendications précédentes, utilisant des interrupteurs de puissance à semi-conducteurs, **caractérisé en ce que** sont traitées, dans le modèle de température, des valeurs de dissipation de puissance d'un ou plusieurs éléments aptes à être activés, par exemple un transistor et/ou une diode de l'interrupteur de puissance à semi-conducteurs.

8. Procédé selon les revendications 6 et 7, **caractérisé en ce qu'**en cas de fréquence de sortie ou fréquence fondamentale supérieure à 5 Hz, on utilise, pour le calcul de l'une ou de plusieurs températures de couche de jonction, une valeur moyenne de la dissipation de puissance respective.

9. Procédé selon les revendications 6 et 7, **caractérisé en ce qu'**en cas de fréquence de sortie ou fréquence fondamentale inférieure ou égale à 5 Hz, on utilise pour le calcul de l'une ou de plusieurs températures de couche de jonction, une valeur instantanée de la dissipation de puissance respective.

10. Système d'interrupteurs électroniques de puissance captant la température, en particulier de convertisseurs de fréquence (9) pour entraînements électriques ou autres convertisseurs, pour réaliser le procédé selon l'une des revendications précédentes, comprenant deux interrupteurs ou plus (SI, S2, S3), en particulier des interrupteurs à semi-conducteurs qui sont couplés avec ou disposés sur un dissipateur de chaleur (1) commun, et comprenant un dispositif de calcul (8) approprié pour la mise en oeuvre et la réalisation d'un modèle de température via un interrupteur respectif (S1-S6) et qui présente des interfaces pour recevoir des signaux sur des paramètres des interrupteurs et des paramètres de fonctionnement ainsi que des valeurs de température, afin de calculer, au moyen du modèle de température, la température et/ou une différence de température à l'intérieur de l'interrupteur respectif (S1-S6), **caractérisé en ce qu'**est disposé au centre entre les deux ou entre respectivement deux interrupteurs (SI, S4 ; S2, S5 ; S3, S6) un capteur de température (Thu, Thv, Thw) qui est couplé en liaison de transfert thermique avec le dissipateur de chaleur (1) et côté sortie avec le dispositif de calcul (8).

11. Système selon la revendication 10, **caractérisé en ce que** le ou les capteurs de température (Thu, Thv, Thw) sont montés directement sur le dissipateur de chaleur (1).

12. Système selon la revendication 10 ou 11, **caractérisé en ce que** les différents capteurs de température (Thu, Thv, Thw) sont disposés le long d'une ligne de symétrie médiane du dissipateur de chaleur (1).

13. Système selon l'une des revendications 10 à 12, **caractérisé en ce que** les différents capteurs de température (Thu, Thv, Thw) sont uniformément répartis sur la surface du dissipateur de chaleur (1).

14. Système selon l'une des revendications 10 à 13, dans lequel plus de deux interrupteurs (S1-S6) sont câblés sur le dissipateur de chaleur (1) et aptes à être commandés pour générer un système de courant alternatif (U, V, W) à deux, trois ou plusieurs phases, **caractérisé en ce que**, pour chaque phase de courant alternatif (U, V, W), un capteur de température (Thu, Thv, Thw) est disposé au centre entre deux interrupteurs (S1-S6).

15. Système selon la revendication 14, **caractérisé en ce que**, pour générer un système de courant triphasé à trois phases (U, V, W), au moins six interrupteurs (S1-S6) sont câblés sur le dissipateur de chaleur (1) et aptes à être commandés, dont respectivement deux (SI, S4 ; S2, S5 ; S3, S6) servent à générer une phase de courant triphasé (U, V, W) et sont disposés en vis-à-vis, **caractérisé en ce que**, pour chaque phase de courant triphasé (U, V, W), respectivement un capteur de température (Thu, Thv, Thw) est disposé au centre entre les deux interrupteurs (SI, S4 ; S2, S5 ; S3, S6) disposés en vis-à-vis.
